# EUROPÄISCHE PATENTSCHRIFT

(11) **EP 0 765 449 B1**
(45) Veröffentlichungstag und Bekanntmachung des Hinweises auf die Patenterteilung: **03.05.2000**
(21) Anmeldenummer: 95923227.3
(22) Anmeldetag: 03.06.1995
(51) Int. Cl.: F16K 15/14

(54) **RÜCKSCHLAGVENTIL**
NON-RETURN VALVE
CLAPET ANTIRETOUR

(30) Priorität: 13.06.1994 DE 4420586
(43) Veröffentlichungstag der Anmeldung: 02.04.1997
(73) Patentinhaber: A. Kayser Automotive Systems GmbH, 37574 Einbeck (DE)
(72) Erfinder: Schulte, Franz, 59557 Lipstadt (DE)
(74) Vertreter: Müller-Boré & Partner Patentanwälte
(86) Internationale Anmeldenummer: EP9502115
(87) Internationale Veröffentlichungsnummer: WO9534776

(56) Entgegenhaltungen:
- FR-A- 2 408 780
- US-A- 2 547 377
- US-A- 3 403 696
- US-A- 5 027 784

## Beschreibung

Die Erfindung betrifft ein Rückschlagventil, mit einem flächigen Ventilsitz, in den eine zentrale Durchgangsöffnung und mehrere radial davon beabstandete Durchlässe eingebracht sind, und mit einem pilzförmigen Verschlußglied, welches zu seiner Arretierung mit seinem Stiel in die Durchgangsöffnung eingesetzt ist und mit seinem aus weichelastischem Material bestehenden Kopf die radial beabstandeten Durchlässe abdeckt, wobei der Kopf mit einer äußeren Ringfläche auf dem Ventilsitz aufliegt.

Derartige Ventile wer en zum Absperren einer Unterdruckleitung, wie zum Beispiel bei einem Unterdruckverstärker in Kraftfahrzeugen benutzt. An ein solches Rückschlagventil werden unter anderem folgende Forderungen gestellt:
- die Schaltzeit muß sehr klein sein;
- die Dichtigkeit muß gewährleistet sein;
- sie dürfen keine Strömungsgeräusche, das heißt bei Luft als Medium keine Pfeifgeräusche erzeugen.

Wird ein zähelastisches Material für das Verschlußglied oder nur für seinen Kopf verwendet, so leidet einmal bei mangelhafter Formanpassung des Verschlußgliedes an den Ventilsitz die Dichtigkeit und zum anderen entstehen Pfeifgeräusche. Bei Verwendung eines weichelastischen Materials als Verschlußglied wird zwar das Entstehen von Pfeifgeräuschen weitestgehend verhindert und die Dichtigkeit ist zumindest anfangs auch vorhanden, jedoch läßt letztere nach kurzer Zeit nach, weil aufgrund des ständigen Unterdrucks auf der Innenseite des Verschlußgliedes dieses partiell in die Durchlässe gesogen wird, wodurch sich nach längerer Benutzung kleine Noppen auf der Innenseite des Kopfes des Verschlußgliedes bilden. Dadurch entstehen Dichtigkeitsprobleme, insbesondere wenn sich das Verschlußglied geringfügig axial verdreht. Außerdem wird der Kopf in seiner Form leicht deformiert, so daß der äußere Randbereich nicht mehr auf dem gesamten Umfang mit der gleichen Kraft auf dem ventilsitz aufliegt.

Abhilfe könnte eventuell dadurch geschaffen werden, daß die Durchlässe im Durchmesser kleiner gestaltet sind. Dem sind jedoch insbesondere bei einem im Spritzverfahren hergestellten Ventilsitz enge Grenzen gesetzt, da die die Durchlässe erzeugenden Stempel im Spritzwerkzeug wegen ihrer Seitenstabilität nicht sehr dünn sein dürfen.

US-A-5 027 784 offenbart ein PCV-System mit einem Rückschlagventil, wie es im Oberbegriff von Anspruch 1 beschrieben ist. Das Rückschlagventil umfaßt einen Ventilkörper mit einem elastomären Ventilkopf und einen Ventilsitz, der eine Ventilsitzfläche an dessen unterer Fläche beinhaltet. Der Ventilsitz beinhaltet ferner zumindest eine Perforation, welche sich in die untere Fläche öffnet.

Aufgabe der Erfindung ist es, das gattungsgemäße RückschLagventil derart zu gestalten, daß eine gute Dichtigkeit gegeben ist, keine Pfeifgeräusche auftreten, zumindest der Kopf des Verschlußgliedes aus einem weichelastischen Material hergestellt werden kann, ohne daß sich dieser im Bereich der Durchlässe im Ventilsitz in diese formverändernd einsaugt, und zwar ohne daß die Durchlässe in ihrem Durchmesser sehr klein ausgeführt sind.

Diese Aufgabe wird erfindungsgemäß dadurch gelöst, daß zwischen dem Kopf des Verschlußgliedes und dem Ventilsitz ein die Durchlässe abdeckendes feinmaschiges Sieb angeordnet ist. Das Sieb verhindert nicht nur eine Noppenbildung an der Unterseite des Kopfes im Bereich der Durchlässe, sondern es erzeugt in der durchströmenden Luft eine solche Verwirbelung, daß keine Pfeifgeräusche auftreten.

Bei einer vorteilhaften Ausgestaltung der Erfindung ist das Sieb in einer seiner Dicke entsprechenden Vertiefung des Ventilsitzes eingesetzt. Dadurch ist sichergestellt, daß das Verschlußglied mit seinem Rand des Kopfes sicher auf dem Ventilsitz aufliegt und nicht auf dem Sieb. Der gleiche Vorteil wird erreicht, wenn die das Sieb in seinen Außenabmessungen überragende Ringfläche des Kopfes des Verschlußgliedes auf einer ringförmig verlaufenden, aus dem Ventilsitz vorspringenden Wulst aufliegt.

Weiterhin ist es vorteilhaft, wenn das Sieb außen von der ringförmig verlaufenden Wulst zentriert wird.

Um das Sieb nicht nur in radialer, sondern auch in axialer Richtung in seiner Lage zu sichern, liegt der Kopf mit einem zentralen Ansatz auf dem Sieb auf.

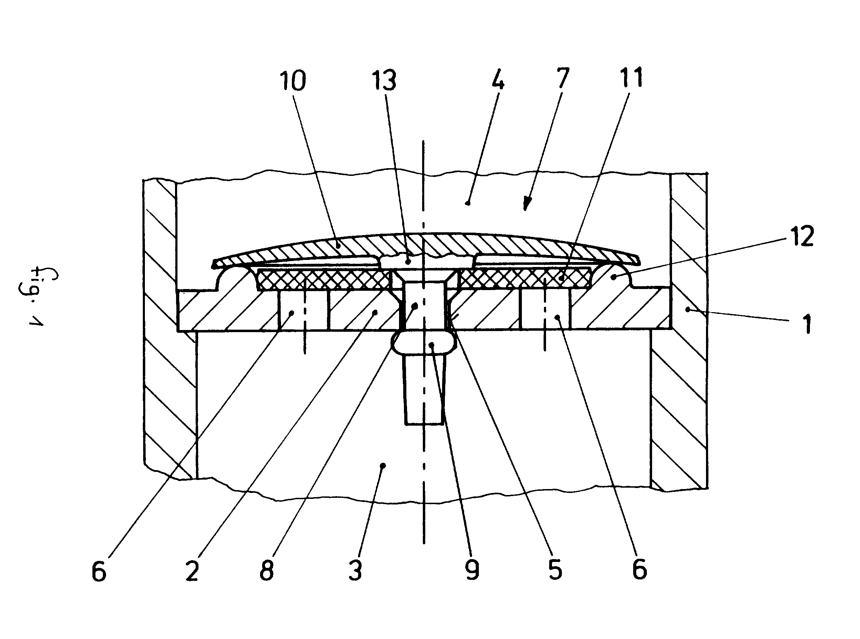

Die Erfindung ist in der Zeichnung veranschaulicht.

Das rohrförmige Teil (1) ist durch den plattenförmigen Ventilsitz (2) in eine Niederdruckseite (3) und eine Ansaugseite (4) unterteilt, der plattenförmige Ventilsitz (2), der eben aber auch gewölbt ausgeführt sein kann, ist fest und dicht in den rohrförmigen Teil (1) eingesetzt. Er weist eine zentrale Durchgangsöffnung (5) und radial davon beabstandete mehrere auf einem oder mehreren konzentrischen Kreisen angeordnete Durchlässe (6) auf. Das einteilig aus weichelastischem Material hergestellte Verschlußglied (7) ist pilzförmig ausgebildet und mit seinem Stiel (8) zumindest in axialer Richtung fest in die zentrale Durchgangsöffnung (5) eingesetzt. Hierzu weist der Stiel (8) eine wulstförmige Verdickung (9) auf, die die Unterseite des plattenförmigen Ventilsitzes (2) mit Vorspannung hintergreift.

Auf dem Ventilsitz (2), zwischen diesem und dem Kopf (10) des pilzförmigen Verschlußgliedes (7) ist ein feinmaschiges Sieb (11) angeordnet, das auf dem Ventilsitz (2) aufliegt und von dem zentralen Ansatz (13) des Kopfes (10) gegen diesen gepreßt wird. Das Sieb (11) ist als Kreisringfläche gestaltet und so groß, daß alle Durchlässe (6) von diesem abgedeckt werden. Das Sieb (11) wird außen von einer ringförmig verlaufenden, aus dem Ventilsitz (2) hervorragenden Wulst (12) zentriert, welche die eigentliche Sitzfläche bildet, auf der der Kopf (10) des Verschlußgliedes mit seinem kreisringförmigen Außenbereich dichtend aufliegt.

## Patentansprüche

1. Rückschlagventil mit einem flächigen Ventilsitz (2), in dem eine zentrale Durchgangsöffnung (5) und mehrere radial davon beabstandete Durchlässe (6) eingebracht sind und mit einem pilzförmigen Verschlußglied (7), welches zu seiner Arretierung mit einem Stiel (8) in die zentrale Durchgangsöffnung (5) eingesetzt ist und mit seinem aus weichelastischen Material bestehenden Kopf (10) die radial beabstandeten Durchlässe (6) abdeckt, wobei der Kopf (10) mit einer äußeren Ringfläche auf dem Ventilsitz (2) aufliegt, dadurch gekennzeichnet, daß zwischen dem Kopf (10) des Verschlußgliedes (7) und dem Ventilsitz (2) ein die Durchlässe abdeckendes, feinmaschiges Sieb (11) angeordnet ist.

2. Rückschlagventil nach Anspruch 1, dadurch gekennzeichnet, daß das Sieb (11) in einer seiner Dicke entsprechenden Vertiefung des Ventilsitzes (2) eingesetzt ist.

3. Rückschlagventil nach Anspruch 1, dadurch gekennzeichnet, daß die das Sieb (11) in seinen Außenabmessungen überragende Ringfläche des Kopfes (10) des Verschlußgliedes (7) auf einer ringförmig verlaufenden, aus dem Ventilsitz (2) vorspringenden Wulst (12) aufliegt.

4. Ventilsitz nach Anspruch 3, dadurch gekennzeichnet, daß das Sieb (11) außen von der ringförmig verlaufenden Wulst (12) zentriert wird.

5. Rückschlagventil nach einem der vorstehenden Ansprüche, dadurch gekennzeichnet, daß das Sieb (11) in der Fläche kreisringförmig ist.

6. Rückschlagventil nach Anspruch 5, dadurch gekennzeichnet, daß der Kopf (10) mit einem zentralen Ansatz (13) auf dem Sieb (11) aufliegt.

## Claims

1. Non-return valve with a sheet-like valve seat (2), in which a central through-opening (5) and a plurality of passages (6) spaced radially apart therefrom are made and with a mushroom-shaped closure element (7), which for its arrestment is inserted with a stem (8) into the central through-opening (5) and covers with its head (10), consisting of pliable material, the radially spaced-apart passages (6), the head (10) resting with an outer annular face on the valve seat (2), characterized in that a fine-meshed screen (11), covering the passages, is arranged between the head (10) of the closure element (7) and the valve seat (2).

2. Non-return valve according to Claim 1, characterized in that the screen (11) is inserted in a depression of corresponding thickness in the valve seat (2).

3. Non-return valve according to Claim 1, characterized in that the annular face of the head (10) of the closure element (7), protruding in its outer dimensions beyond the screen (11), rests on an annularly extending bead (12) projecting from the valve seat (2).

4. Valve seat according to Claim 3, characterized in that the screen (11) is centred on the outside by the annularly extending bead (12).

5. Non-return valve according to one of the preceding claims, characterized in that the surface area of the screen (11) is in the form of a circular ring.

6. Non-return valve according to Claim 5, characterized in that the head (10) rests with a central extension (13) on the screen (11).

## Revendications

1. Soupape de non-retour comportant un siège de soupape (2) plan, dans lequel sont agencés une ouverture de passage (5) centrale et plusieurs passages (6) disposés radialement à une certaine distance, et comportant un élément d'obturation (7) en forme de champignon qui est placé pour son blocage avec une tige (8) dans l'ouverture de passage (5) centrale et qui recouvre avec sa tête (10) en un matériau souple et élastique les passages (6) disposés radialement à une certaine distance, la tête (10) reposant avec une surface annulaire extérieure sur le siège de soupape (2), caractérisée en ce qu'un filtre (11) à mailles fines et recouvrant les passages est agencé entre la tête (10) de l'élément d'obturation (7) et le siège de soupape (2).

2. Soupape de non-retour selon la revendication 1, caractérisée en ce que le filtre (11) est placé dans un évidement, correspondant à son épaisseur, du siège de soupape (2).

3. Soupape de non-retour selon la revendication 1, caractérisée en ce que la surface annulaire, dépassant du filtre (11) par ses dimensions extérieures, de la tête (10) de l'élément d'obturation (7) repose sur un bourrelet (12) s'étendant en forme d'anneau et saillant à partir du siège de soupape (2).

4. Soupape de non-retour selon la revendication 3, caractérisée en ce que le filtre (11) est centré en dehors du bourrelet (12) s'étendant en forme d'anneau.

5. Soupape de non-retour selon l'une des revendications précédentes, caractérisée en ce que le filtre (11) a une surface en forme d'anneau de cercle.

6. Soupape de non-retour selon la revendication 5, caractérisée en ce que la tête (10) repose avec une partie ajoutée (13) centrale sur le filtre (11).
